Europäisches Patentamt

European Patent Office

Office européen des brevets

(19)

(11) EP 0 626 513 B1

(12) **FASCICULE DE BREVET EUROPEEN**

(45) Date de publication et mention
de la délivrance du brevet:
**13.01.1999 Bulletin 1999/02**

(51) Int Cl.⁶: **F02K 9/97**

(21) Numéro de dépôt: **94401180.8**

(22) Date de dépôt: **27.05.1994**

(54) **Tuyère de moteur-fusée à section de sortie sélectivement réduite**

Raketendüse mit selektiv reduziertem Austrittsquerschnitt

Rocket nozzle with selectively reduced outlet cross-section

(84) Etats contractants désignés:
DE SE

(30) Priorité: **28.05.1993 FR 9306455**

(43) Date de publication de la demande:
**30.11.1994 Bulletin 1994/48**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
• **Pacou, Claude**
**F-18330 Nancay (FR)**
• **Vuillamy, Didier**
**F-76230 Quincampoix (FR)**
• **Tiret, Etienne**
**F-27950 La Chapelle Reanville (FR)**

• **Desclos, Pierre**
**F-27200 Vernon (FR)**
• **Beaurain, André**
**F-60230 Chambly (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
DE-B- 1 210 635        FR-A- 2 457 390
FR-A- 2 503 794        FR-A- 2 568 316
FR-A- 2 618 488        US-A- 3 925 982

• JOURNAL OF PROPULSION AND POWER.,
vol.8, no.6, Novembre 1992, NEW YORK pages
1239 - 1244 J.H.FRIDELL, M.E.FRANKE
'Confined jet thrust control nozzle studies'

## Description

Domaine de l'invention

L'invention concerne les tuyères de moteurs-fusées et plus particulièrement les tuyères destinées à fonctionner dans un milieu extérieur à pression variable et comportant des moyens d'adaptation du divergent aux conditions ambiantes variables du vol.

Art antérieur

La recherche d'une impulsion spécifique élevée, en altitude, conduit à équiper les moteurs de fusée, de tuyères à grand rapport de section. On est toutefois limité dans ce sens par le phénomène de décollement de jet qui induit des charges mécaniques inacceptables pour le divergent.

Pour un moteur donné, l'impulsion spécifique s'accroît à mesure que la pression ambiante diminue, comme lors de la montée d'une fusée dans l'atmosphère, et les lois de la physique montrent que le fonctionnement de la tuyère est optimal à une certaine altitude pour laquelle la tuyère est dite adaptée. Les tuyères sont généralement optimisées en fonction des performances globales de l'étage, ce qui conduit la plupart du temps à des tuyères sur-détendues dont la poussée sera maximale à une altitude relativement élevée. La poussée est maximale à l'altitude d'adaptation pour laquelle la pression statique des gaz $P_e$ dans la section de sortie de la tuyère est alors égale à la pression ambiante $P_a$ qui est relativement faible. L'altitude d'adaptation peut être située par exemple à une dizaine de kilomètres du sol. Pour toute la phase du vol depuis le sol jusqu'à l'altitude d'adaptation, la pression statique des gaz $P_e$ dans la section de sortie de la tuyère est très sensiblement inférieure à la pression ambiante. Dans cette phase pendant laquelle la tuyère est sur-détendue et notamment au démarrage où la pression ambiante $P_a$ correspond à la pression atmosphérique au niveau du sol, il existe un phénomène de décollement du jet par rapport à la paroi du divergent, qui limite le rapport de détente des gaz c'est-à-dire le rapport entre la pression $P_o$ dans la chambre de combustion et la pression statique des gaz $P_e$ dans la section de sortie de la tuyère.

Afin d'éviter le phénomène de décollement de jet, on a déjà proposé par exemple dans le document FR-A-2 503 794 d'utiliser au démarrage et à basse altitude un divergent dont la section de sortie est réduite et qui est installé à l'intérieur d'un divergent présentant une plus grande section de sortie. Lorsque le moteur-fusée a atteint une altitude telle que le divergent de plus grande section de sortie peut fonctionner sans risque de décollement du jet, le divergent interne de section réduite est séparé et largué.

Un tel système d'adaptation d'une tuyère de moteur-fusée n'est pas entièrement satisfaisant car il implique un raccordement du petit divergent interne au niveau du col de la tuyère, qui est à une température très élevée, ce qui rend la réalisation relativement complexe. La réalisation de deux divergents complets emboîtés à la façon de poupées gigognes tend par ailleurs à augmenter la masse de l'ensemble.

Il a encore été proposé, notamment par les documents FR-A-2 568 316 et FR-A-2 457 390 de réaliser des tuyères à géométrie variable comprenant un premier divergent de relativement faible longueur et faible section de sortie utilisé dans une première phase de vol à partir du sol, et un ou plusieurs tronçons de divergent qui viennent se raccorder au premier divergent, en aval de celui-ci pour le prolonger en créant une section de sortie plus grande lorsque le moteur-fusée a atteint une certaine altitude pour laquelle la pression ambiante est réduite. De tels types de tuyères à divergent déployable permettent d'améliorer l'adaptation du moteur-fusée à différentes phases du vol, mais impliquent également un accroissement de la complexité de réalisation, du coût et de la masse embarquée et ne garantissent pas toujours une sécurité de fonctionnement suffisante compte tenu de la fragilité des mécanismes de déploiement et de la difficulté à réaliser un alignement correct des différents tronçons de divergent.

L'utilisation sur un moteur-fusée, d'un divergent déployable présente aussi, en dehors des problèmes liés au système de déploiement proprement dit, des contraintes au niveau de l'architecture moteur.

Il est encore connu, notamment par les documents US-A-3 925 982 ou FR-A-2 618 488, d'utiliser un divergent à rapport de section fixé, dont la section de sortie relativement importante optimise le fonctionnement en altitude dans un environnement à pression externe faible, et de mettre en oeuvre des moyens pour stabiliser au démarrage et dans une première phase de vol à faible altitude le décollement du jet de gaz par rapport à la paroi du divergent, à une distance déterminée de la section de sortie. On a toutefois jusqu'à présent proposé de stabiliser le décollement de jet essentiellement à l'aide d'une injection de fluide sous une forme d'anneau à travers la paroi du divergent. L'obligation d'utiliser un fluide et de commander son injection à l'intérieur du divergent accroit la complexité du système et tend à diminuer sa fiabilité.

Un article de J.H. Friddell et M. E. Franke intitulé "Confined jet thrust control nozzle studies", paru dans le "Journal of Propulsion and Power", Vol. 8, n° 6 de novembre 1992, New York, pp. 1239-1244, décrit un système de pilotage par injection de gaz, d'un engin muni d'un moteur-fusée. L'efficacité de ce système est assurée en réalisant un confinement du jet dans la tuyère, à l'aide d'un obstacle annulaire placé à la sortie de la tuyère.

Objet et description succincte de l'invention

La présente invention vise à remédier aux inconvénients précités et à permettre une bonne adaptation d'une tuyère de moteur-fusée à différentes conditions de vol depuis le sol jusqu'à une altitude où la pression ambiante est réduite, sans qu'il soit mis en oeuvre de pièce complémentaire au voisinage du col de la tuyère, ni de mécanisme de déploiement de pièces d'extension de divergent, ni nécessairement de système d'injection de fluide.

L'invention vise à conférer à une tuyère de moteur-fusée un bon degré d'adaptabilité avec un rendement global satisfaisant à l'aide exclusivement de moyens statiques permettant de remédier aux problèmes liés au phénomène de décollement de jet.

Ces buts sont atteints grâce à une tuyère de moteur-fusée à section de sortie sélectivement réduite, comprenant une partie convergente recevant les gaz produits dans une chambre de combustion, un col de tuyère de section réduite (So) et un divergent raccordé au col de tuyère et se terminant à sa partie aval par une section de sortie du jet de gaz (Se) définissant un rapport de section ($\varepsilon$ = Se/So),

caractérisée en ce qu'un obstacle annulaire largable est rapporté à l'extrémité aval du divergent de manière à définir à la sortie du divergent une zone de section ($S_1$) sélectivement réduite afin d'assurer, dans une première phase de vol, une stabilité du décollement de l'écoulement de gaz chauds par rapport à la paroi du divergent.

La zone de section ($S_1$) sélectivement réduite peut constituer, par exemple, de l'ordre de 55 à 85% de la section de sortie (Se) du divergent.

Le rapport de section $\varepsilon$ de la tuyère est avantageusement supérieur à 45 et par exemple supérieur ou égal à 80.

L'obstacle annulaire largable, qui constitue un diaphragme, présente une section interne de passage qui peut être calculée d'après les considérations suivantes :

### Première considération

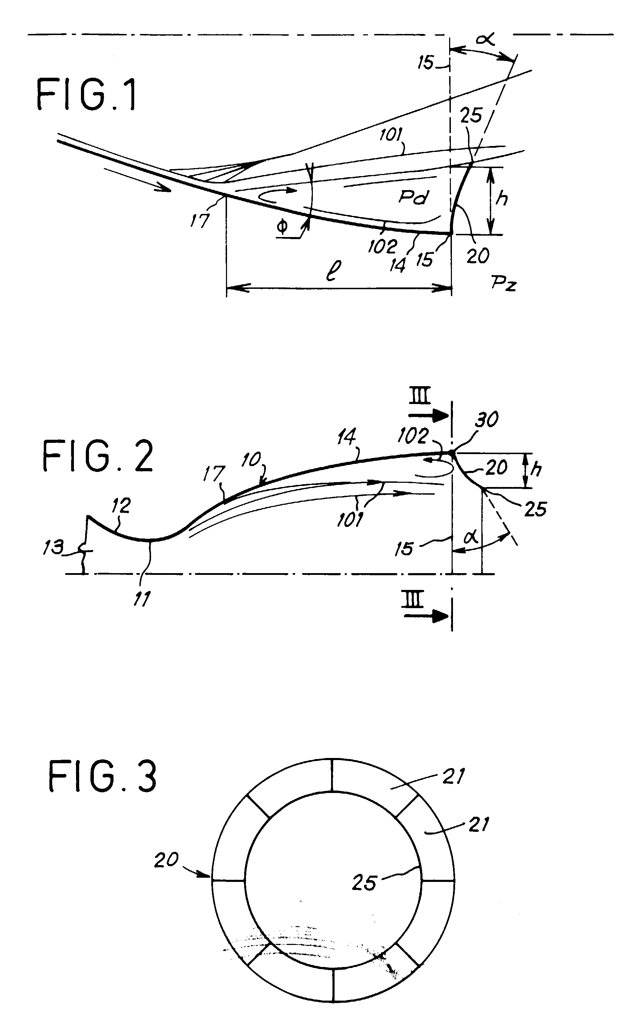

La pression Pd dans la zone morte étant fixée, la hauteur h de l'obstacle annulaire est définie d'après la figure 1:

- la déviation $\Phi$ du jet
- le profil de la tuyère
- le saut de pression à travers le choc
- le champ de pression et de Mach sur la tuyère
- le critère de décollement

### Deuxième considération

La tuyère équipée d'un obstacle annulaire fonctionne comme une tuyère supersonique à deux cols, de sorte que la section de passage $A_D$ de l'obstacle annulaire doit vérifier la relation

$$A_D > K A_C (Pi_1/Pi_2) M_T$$

K: facteur tenant compte des effets de viscosité k > 1
$A_C$: surface du col de la tuyère
$Pi_1$ : pression d'arrêt avant le choc à Mach $M_T$
$Pi_2$ : pression d'arrêt après le choc à Mach $M_T$
$M_T$: nombre de Mach maximal amorcé dans la configuration de tuyère à deux cols et auquel on applique la relation du choc normal pour déterminer $Pi_1$ et $Pi_2$

La deuxième considération étant dans les cas d'applications envisagées non pénalisante, la hauteur du diagramme h peut être fixée d'après la seule première considération.

A l'altitude envisagée de largage, on doit seulement vérifier que la pression ambiante est suffisamment basse pour éviter qu'un décollement n'apparaisse après largage de l'obstacle annulaire.

L'invention, grâce à l'adjonction d'un obstacle annulaire largable, qui provoque une restriction sélective de la section de passage en sortie du divergent permet de stabiliser le décollement du jet et empêche ainsi l'apparition de charges dissymétriques sur le divergent.

Une fois que le moteur-fusée se trouve à une altitude suffisante pour qu'un décollement de jet sur la tuyère libérée de son obstacle annulaire ne soit plus susceptible de se produire, l'obstacle annulaire est éjecté de manière à laisser au jet la possibilité de s'épanouir sur toute la section de sortie du divergent. L'éjection de l'obstacle annulaire peut se faire facilement puisque celui-ci est extérieur au divergent et ne remonte pas jusqu'au col du divergent.

Selon un mode de réalisation avantageux, l'obstacle annulaire est constitué par un anneau de forme axisymétrique incliné vers l'extérieur par rapport à un plan perpendiculaire à l'axe de la tuyère en formant par rapport à ce plan un angle compris entre environ 20° et 45° et présentant une courbure régulière.

Ainsi, selon un mode de réalisation avantageux, l'obstacle annulaire est formé par une surface axisymétrique ayant une génératrice régulière, qui présente par rapport à un plan passant par l'extrémité du divergent, un angle par exemple d'environ 45° en sortie de l'obstacle annulaire, ceci étant réalisé pour étaler le flux thermique échangé avec l'écoulement.

L'obstacle annulaire est constitué par un ensemble de secteurs angulaires assemblés les uns aux autres et munis de surfaces de contact qui rendent leurs déplacements solidaires.

L'obstacle annulaire est équipé d'un dispositif de protection thermique.

Ce dispositif de protection thermique peut comprendre un matériau abradable qui forme une partie au moins de l'obstacle annulaire, pour être sous la forme d'un revêtement.

Le dispositif de protection thermique peut encore comprendre des moyens d'injection de gaz de turbine à travers la paroi du divergent en aval de la zone de décollement de l'écoulement de gaz chauds par rapport à la paroi du divergent.

Dans ce cas, selon un mode particulier de réalisation, le dispositif de protection thermique comprend des moyens d'injection de gaz de turbine à travers la paroi du divergent au voisinage de la section de sortie du divergent et de la zone de raccordement de l'obstacle annulaire.

Le dispositif de protection thermique peut encore comprendre des moyens de mise en circulation de gaz frais à travers la paroi de l'obstacle annulaire.

Les moyens de contrôle thermique de l'obstacle annulaire permettent d'assurer non seulement sa tenue thermique, mais également celle des dispositifs permettant son largage.

L'obstacle annulaire comprend des moyens de liaison sélective avec l'extrémité aval du divergent.

La rupture de ces moyens de liaison peut être commandée à distance par des moyens pyrotechniques, pneumatiques ou électriques.

Selon un autre mode de réalisation possible, les moyens de liaison entre l'obstacle annulaire et l'extrémité aval du divergent sont configurés de manière à se rompre automatiquement après un temps de fonctionnement prédéterminé.

Ces moyens à rupture automatique peuvent comprendre par exemple des pièces en matériau composite abradable.

Selon un mode de réalisation particulier, les secteurs angulaires assemblés les uns aux autres comprennent un talon en forme d'étrier destiné à venir enserrer une bride formée à l'extrémité aval du divergent.

Selon un exemple particulier de réalisation, les secteurs angulaires constituant l'obstacle annulaire présentent une extrémité interne recourbée définissant une gorge dans laquelle est engagé un câble coopérant avec un système de tension et de déverrouillage pour maintenir les secteurs angulaires assemblés entre eux et raccordés au divergent pendant ladite première phase de vol et libérer les secteurs angulaires et permettre leur éjection pour libérer la section de sortie du divergent à la fin de ladite première phase de vol.

Brève description des dessins

D'autres caractéristiques et avantages de l'invention ressortiront de la description suivante de modes particuliers de réalisation donnés à titre d'exemples, en référence aux dessins annexés, sur lesquels:

- la figure 1 est une vue schématique en demi-coupe axiale d'une portion de tuyère avec un obstacle annulaire placé dans le plan de sortie du divergent, conforme à l'invention,
- la figure 2 est une vue schématique en demi-coupe axiale d'une tuyère selon un mode particulier de réalisation de l'invention avec un obstacle annulaire axisymétrique présentant une paroi inclinée vers l'extérieur par rapport au plan de sortie du divergent,
- la figure 3 est une vue en coupe selon la ligne III-III de la figure 2 montrant un obstacle annulaire en plusieurs parties,
- la figure 4 est une vue en coupe axiale montrant une partie d'un exemple de système de liaison entre un obstacle annulaire et la partie aval du divergent d'une tuyère selon l'invention,
- la figure 5 est une vue en perspective d'un exemple de secteur angulaire constituant une partie de l'obstacle annulaire représenté sur la figure 4,
- la figure 6 est une vue de détail montrant un exemple d'assemblage de secteurs angulaires constituant un obstacle annulaire,
- la figure 7 est une vue en perspective montrant l'exemple de système de liaison de la figure 6 appliqué à un obstacle annulaire constitué en plusieurs éléments,

les figures 8A, 8B et 8C sont des vues schématiques en demi-coupe axiale d'une tuyère selon l'invention équipée d'un obstacle annulaire et de dispositif de refroidissement de celui-ci, et

la figure 9 est une vue schématique en coupe axiale d'une tuyère selon l'invention avec une demi-coupe supérieure correspondant à une géométrie avant largage d'un obstacle annulaire et une demi-coupe inférieure correspondant à une géométrie après largage de l'obstacle annulaire.

Description détaillée de modes particuliers de réalisation de l'invention

La figure 2 montre la forme générale d'une tuyère 10 de moteur-fusée comprenant une partie convergente amont 12 recevant les gaz chauds produits dans une chambre de combustion 13, un col de tuyère 11, et un divergent 14 qui assure la détente des gaz chauds en aval du col 11 et leur éjection au niveau de l'extrémité aval 15 du divergent qui présente une section de sortie Se.

Le rapport de section ε entre la section de sortie Se du divergent et la section So de passage des gaz chauds au niveau du col de tuyère 11 définit un taux de détente. Le rapport de détente de la tuyère 10 est en effet défini par le rapport entre la pression Po dans la chambre de combustion et la pression statique des gaz Pe dans la section de sortie de la tuyère, et le rapport de détente dépend directement du rapport de section ε.

On cherche en général à avoir un rapport de détente, donc un rapport de section ε le plus grand possible, afin d'obtenir une poussée importante.

Comme cela a déjà été indiqué, la poussée n'est cependant maximale que si la tuyère est adaptée, c'est-à-dire si la pression statique des gaz Pe dans la section de sortie de la tuyère est égale à la pression du milieu ambiant Pa.

Si la tuyère est adaptée pour un fonctionnement à haute altitude, avec une pression ambiante Pa très faible ou nulle, la tuyère est sur-détendue au niveau du sol où la pression statique Pe des gaz dans la section de sortie de la tuyère est très inférieure à la pression ambiante Pa qui est alors égale à 1 bar, et il se produit avec les divergents traditionnels un phénomène de décollement du jet des gaz chauds par rapport à la paroi du divergent 14. Ce phénomène de décollement du jet, par les dissymétries et instabilités qu'il provoque, peut conduire à une destruction du divergent.

C'est pourquoi on a déjà proposé soit de mettre en oeuvre des moyens assez complexes pour stabiliser le décollement du jet à l'aide de systèmes d'injection de gaz, soit plus généralement de limiter la longueur du divergent et sa section de sortie afin d'éviter à basse altitude le phénomène de décollement du jet. Ceci se traduit par une perte de poussée à haute altitude ou par l'obligation d'adjoindre à haute altitude des systèmes d'extension de tuyère qui compliquent fortement la structure de l'ensemble et la fragilisent.

On considérera à titre d'exemple une tuyère de moteur-fusée classique d'un premier étage de lanceur, dont le rapport de section a été limité à $\varepsilon=45$ de façon à éviter qu'au sol ou à très basse altitude un décollement du jet puisse se produire. Ceci correspond, pour les gaz généralement produits dans les moteurs-fusées, à une tuyère qui est adaptée à une pression extérieure de l'ordre de 0,4 bar mais est sous-détendue pour des pressions extérieures inférieures à 0,4 bar, c'est-à-dire à des altitudes supérieures à 8 à 10 Km. La poussée reste ainsi limitée pour toutes les phases de vol à une altitude au-delà d'environ 10 km.

L'invention offre un moyen simple d'améliorer l'adaptation d'une tuyère dans une plage de fonctionnement plus étendue en stabilisant le phénomène de décollement de jet se produisant à basse altitude tout en autorisant une géométrie de tuyère présentant un rapport de section $\varepsilon$ élevé, par exemple de l'ordre de 80 à 100 et par suite un gain de poussée aux altitudes élevées, au-delà de 10 km environ, dans l'exemple précité où la pression ambiante est réduite.

Pour cela, un obstacle annulaire 20 (figures 1 et 2) est rattaché à l'extrémité aval 15 du divergent pour assurer une stabilisation du décollement du jet de gaz chauds 101 par rapport à la paroi à basse altitude.

L'obstacle annulaire 20 présente une section externe égale à la section de sortie Se de l'extrémité aval 15 du divergent 14, et définit une zone 25 de passage de section S1 plus réduite que celle de la section de sortie Se du divergent 14.

La zone 25 peut présenter une section de passage $S_1$ réduite qui est de l'ordre de 15 à 45 % plus faible que la section de sortie Se du divergent 14.

L'obstacle annulaire largable 20, qui constitue un diaphragme, présente une section interne de passage et donc une hauteur h, qui peuvent être calculées d'après les considérations qui ont été mentionnées plus haut dans la partie introductive de la description.

L'obstacle 20, peut présenter diverses formes.

Selon le mode de réalisation représenté sur la figure 2, l'obstacle annulaire 20 est constitué par un anneau de forme axisymétrique. La face axisymétrique formant obstacle à l'écoulement est inclinée régulièrement par rapport à un plan perpendiculaire à l'axe de la tuyère pour étaler les flux thermiques.

La distance transversale h entre l'extrémité interne 25 de l'obstacle annulaire 20 et une ligne prolongeant axialement l'extrémité aval 15 du divergent peut être relativement à l'exemple précité de l'ordre de 10 à 40 cm mais dépend naturellement des dimensions du divergent 14.

Pour un divergent dont le diamètre au niveau de la section de sortie est de l'ordre de 2 mètres en définissant un rapport de section de l'ordre de $\varepsilon = 80$ et dont la valeur limite de e pour un fonctionnement au sol sans décollement est de l'ordre de 45, la zone 17 de décollement de jet peut être située à environ 1 mètre de l'extrémité aval 15 du divergent 14.

Dans ce cas, un obstacle annulaire présentant une hauteur h dans le sens transversal de l'ordre de 30 cm est en mesure d'assurer une stabilisation satisfaisante du décollement de jet en assurant à la sortie de l'obstacle annulaire 20 une recompression du jet de gaz à une pression de l'ordre de 0,7 bar voisine de la pression externe dans la première phase du vol.

Sur les figures 1 et 2 on a représenté l'écoulement 101 du jet de gaz chauds dans le divergent 14, lequel jet de gaz a tendance dès le départ à se décoller de la paroi du divergent 14, dans une zone 17 repérée par une coordonnée axiale Xd, se situant à une distance axiale 1 de l'extrémité aval 15 du divergent, et correspondant par exemple à une pression des gaz un peu inférieure à 0,4 bar, compte tenu de la pression extérieure $P_2$ de l'ordre de 1 bar qui est supérieure aux conditions de non décollement de jet. Il se forme alors dans un premier temps en aval de la zone 17 une zone morte 102 sans écoulement au voisinage de la paroi de la partie aval du divergent. La pression des gaz à l'extrémité aval 15 de la tuyère peut être par exemple de l'ordre de 0,7 bar. La présence de l'obstacle annulaire 20 sans empêcher le phénomène de décollement de jet permet de stabiliser celui-ci en protégeant la zone morte 102 des turbulences dues à la pression externe et en assurant une recompression du jet de gaz chauds à une pression Pd. Sur la figure 1, on a représenté l'angle $\Phi$ de déviation du jet 101 en aval de la zone 17 de décollement.

Lorsque le moteur-fusée se trouve à une altitude suffisante, par exemple de l'ordre de 10 km, pour laquelle la pression extérieure est suffisamment basse pour qu'aucun risque de décollement de jet ne puisse se produire dans le divergent 14, l'obstacle annulaire 20 est séparé du divergent 14 au niveau des moyens de liaison 30 pour être éjecté et dégager toute la section de sortie Se à l'extrémité aval 15 du divergent 14.

L'invention permet ainsi d'optimiser le divergent 14 pour un fonctionnement à haute altitude grâce à la section de sortie importante tout en maintenant un bon rendement pendant toutes les phases du vol, l'obstacle annulaire 20 stabilisant le décollement de jet à basse altitude.

On notera qu'il existe diverses méthodes classiques de prévision du lieu de décollement de jet dans une tuyère axisymétrique et que la difficulté consiste non pas à prévoir le lieu de décollement mais à maîtriser le décollement afin d'empêcher des instabilités d'apparaître.

Les méthodes de détermination du lieu de décollement de jet utilisent des critères qui relient les propriétés de l'écoulement en amont du décollement à des caractéristiques de l'écoulement en aval du décollement. Une méthode habituelle consiste à calculer l'écoulement dans la tuyère en fluide non visqueux, pour déterminer les caractéristiques de l'écoulement près de la paroi, puis à appliquer l'un des critères de décollement.

A titre d'exemple, si Mo représente le nombre de Mach de l'écoulement avant le décollement et $P_2$ et $P_1$ représentent les pressions statiques après et avant le décollement, on peut choisir les critères de décollement suivants:

critère de Zukoski $\qquad \dfrac{P_2}{P_1} = 1 + \dfrac{Mo}{2}$

critère de Summerfield $\qquad \dfrac{P_1}{P_2} = (1{,}88Mo-1)^{-0{,}64}$

La pression statique $P_2$ en aval du décollement peut être prise égale à la pression extérieure.

En première approximation le nombre de Mach Mo peut être choisi égal à 3.

On a ainsi la condition

$$\frac{P_1}{P_2} \approx 0{,}4.$$

Au voisinage du sol, quand la pression extérieure $P_2$ est voisine de 1 bar, le décollement se produit ainsi lorsque la pression statique $P_1$ de l'écoulement du gaz éjecté atteint ou descend en dessous d'environ 0,4 bar.

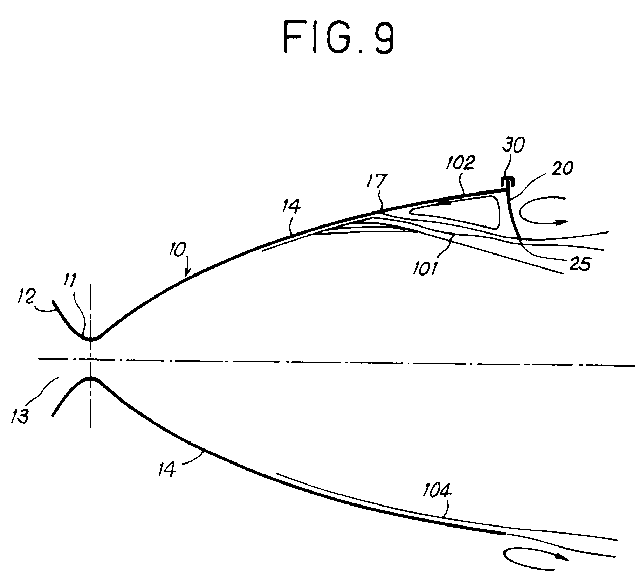

Une tuyère selon l'invention présente deux niveaux d'adaptation, d'une part à basse altitude en présence d'un obstacle annulaire, et d'autre part à haute altitude, après éjection du diffuseur, grâce à un divergent de grande section de sortie. La figure 9 montre les deux configurations possibles de la tuyère selon l'invention, avec en demi-coupe supérieure la configuration à basse altitude, avec un obstacle annulaire 20 disposé à l'extrémité aval du divergent, et en demi-coupe inférieure la configuration à haute altitude, après largage de l'obstacle annulaire 20, où l'on voit réapparaître une couche limite 104 non décollée par rapport à la paroi du divergent.

La double adaptation de la tuyère est ainsi rendue possible à l'aide de l'adjonction simple d'un élément statique, à savoir, l'obstacle annulaire 20, pendant la première phase du vol.

Cette technique présente l'avantage de permettre l'utilisation de différents divergents existants et de pouvoir les adapter à différents types de tirs en adjoignant des obstacles annulaires de caractéristiques différentes.

La présence d'un obstacle annulaire en sortie du divergent dans la première phase de vol permet en outre d'assurer une rigidification du divergent et de l'aider à supporter les efforts de la pression extérieure. Par ailleurs, le largage d'un obstacle annulaire 20 ne risque pas d'endommager le divergent 14, puisque cet obstacle annulaire est toujours placé en sortie du divergent.

L'obstacle annulaire 20 en forme de couronne axisymétrique peut comme cela est représenté sur les figures 3,4 et 7, comporter plusieurs éléments, tels que les tronçons 21 à 24, qui facilitent la fabrication.

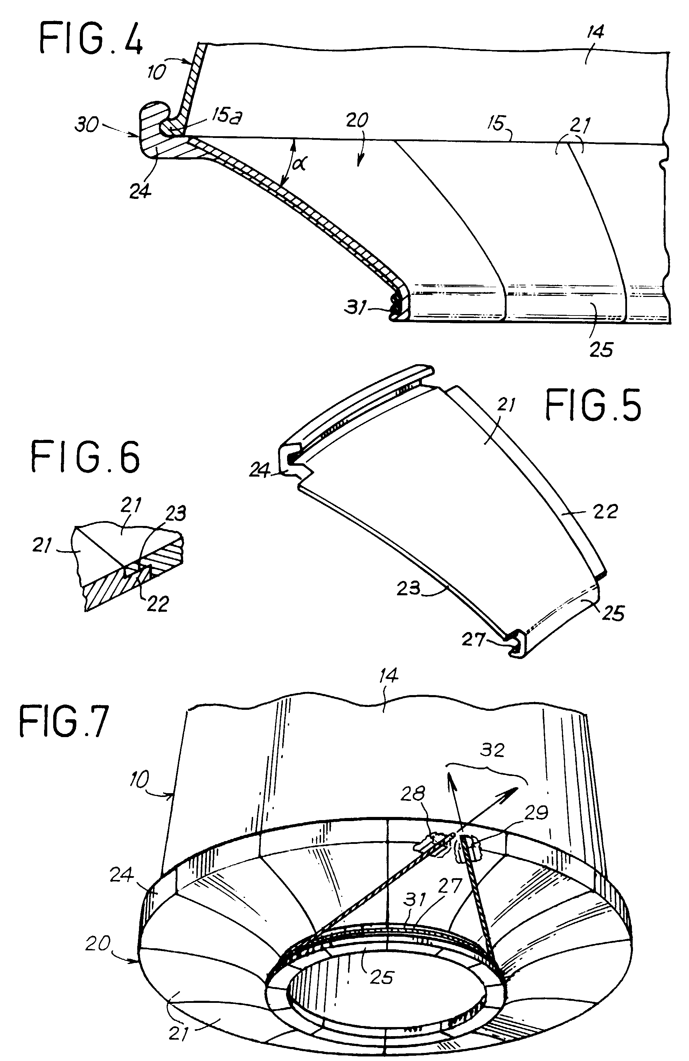

Les figures 4 et 7 montrent un exemple particulier de liaison 30 entre un obstacle annulaire 20, représenté sous la forme d'une couronne axisymétrique, et l'extrémité aval 15 d'un divergent 14. L'obstacle annulaire 20 présente avantageusement une forme galbée avec une courbure régulière, et peut présenter par rapport à un plan passant par l'extrémité du divergent et perpendiculaire à l'axe du divergent un angle a compris entre environ 20° et 45° par rapport à ce plan. La courbure régulière de l'obstacle annulaire 20 permet d'étaler le flux thermique échangé avec l'écoulement.

L'obstacle annulaire 20 est équipé d'un dispositif de protection thermique ou de refroidissement.

Les moyens de contrôle thermique dépendent des facilités du système moteur et peuvent être constitués par des moyens connus.

Selon un mode particulier de réalisation, l'obstacle annulaire 20 est constitué à l'aide d'un matériau abradable. Ce matêriau abradable peut être un simple revêtement ou constituer l'ensemble de l'obstacle annulaire 20.

Les moyens de contrôle thermique de l'obstacle annulaire permettent de préférence d'assurer non seulement la tenue thermique de l'obstacle annulaire, mais également celle des dispositifs 30 provoquant son largage.

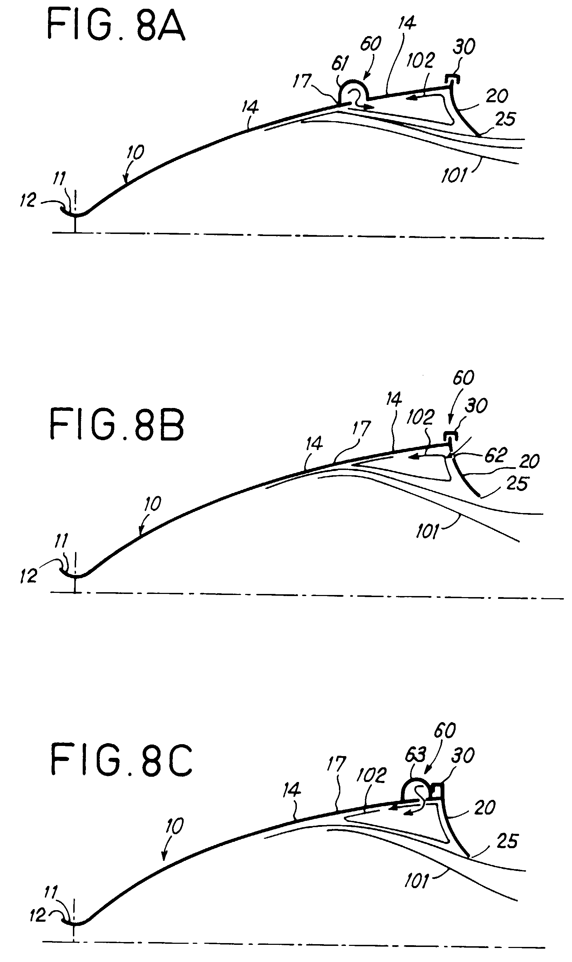

Les figures 8A à 8C montrent différents modes particuliers de protection thermique 60 par injection d'un film de gaz visant à protéger à la fois l'obstacle annulaire 20 et les systèmes de liaison 30 permettant l'éjection de l'obstacle annulaire 20.

Sur la figure 8A, les moyens 60 d'injection d'un film de gaz comprennent un tore 61 situé autour du divergent 14 en aval de la zone 17 de décollement et permettant l'injection d'un film de gaz de turbine à travers la paroi du divergent 14 en direction de l'obstacle annulaire 20 et des moyens de liaison 30.

Sur la figure 8B, les moyens 60 d'injection d'un film de gaz comprennent des ouvertures 62 ménagées dans l'obstacle annulaire 20 afin de permettre à travers la paroi de l'obstacle 20 un soufflage de gaz frais en provenance de l'extérieur du divergent en direction de la zone morte 102 où la pression $P_d$ est inférieure à la pression extérieure $P_z$.

Sur la figure 8C, les moyens 60 d'injection d'un film de gaz comprennent un corps 63 situé au voisinage de l'extrémité aval 15 du divergent 14 et permettant une injection d'un film de gaz de turbine à travers la paroi du divergent 14 au plus près de l'obstacle annulaire 20 et des moyens de liaison 30.

D'une manière générale, les moyens de liaison 30 sont prévus pour être rompus après un temps de fonctionnement prédéterminé lorsque le moteur-fusée a atteint une altitude suffisante pour laquelle la pression extérieure est réduite. Dès la rupture des moyens de liaison 30, la couronne 20 est séparée du divergent 14 et éjectée.

La rupture des moyens de liaison 30 peut s'effectuer par une télécommande à l'aide de moyens pyrotechniques, pneumatiques ou électriques. Il est par exemple possible d'utiliser un cordon pyrotechnique ou des boulons explosifs.

La commande de la rupture des moyens de liaison 30 peut aussi intervenir automatiquement après un temps prédéterminé, par exemple de l'ordre de plusieurs dizaines de secondes, grâce à la mise en oeuvre d'un élément de verrouillage réalisé par exemple en matériau composite abradable. La commande de la rupture des moyens de liaison 30 peut ainsi être de type actif ou passif.

Sur l'exemple de réalisation de moyens de liaison 30, des figures 4 et 7, on voit l'extrémité aval 15 du divergent 14 qui est munie d'une bride 15a tandis que l'extrémité externe 24 la couronne 20 constituée d'un ensemble de secteurs angulaires 21 enserre la bride 15a sous la forme d'un étrier.

Chaque secteur angulaire 21 peut comprendre une partie externe 24 en forme de talon destinée à venir s'engager autour de la bride 15a formée à l'extrémité aval 15 du divergent 14 (figure 4 et 5).

Les secteurs angulaires 21 peuvent présenter des extrémités latérales 22, 23 configurées de manière à permettre des assemblages du type tenon-mortaise (figure 5 et 6).

Avantageusement cet assemblage n'est cependant constitué que par l'association de deux languettes saillantes 22,23 décalées en hauteur venant se chevaucher, de manière à permettre une dissociation plus aisée des différents secteurs angulaires lors de leur détachement du divergent 14 lorsqu'une altitude prédéterminée a été atteinte. L'extrémité interne 25 des secteurs angulaires 21 peut être recourbée vers l'extérieur pour définir une gorge 27 dans laquelle est engagé un câble 31 coopérant avec un système de tension et de déverrouillage 32. Le câble 31 est destiné à maintenir les secteurs angulaires 21 assemblés entre eux et par suite raccordés au divergent 14 par leurs talons 24, pendant la première phase de vol. Le câble 31 peut passer dans des organes de guidage et de tension 28,29 formés sur l'un des secteurs angulaires 21 ou sur le divergent 14 et coopérant avec un dispositif 32 de commande de la rupture de ces organes de guidage et de tension 28,29, destiné à commander la libération des moyens de liaison 30 constitués à la fois par les talons 24 et les moyens de retenue 25,27,31 des secteurs angulaires 21.

Lorsque le dispositif 32 de commande de tension et de déverrouillage a provoqué la libération du câble 31 par rapport aux organes de guidage et de tension 28,29, les secteurs angulaires 21 ne sont plus retenus en position assemblée et peuvent se déconnecter de la bride 15a et être éjectés, dégageant complètement la section de sortie du divergent.

## Revendications

1. Tuyère de moteur-fusée à section de sortie sélectivement réduite, pour premier étage de lanceur, comprenant une partie convergente (12) recevant les gaz produits dans une chambre de combustion (13), un col de tuyère (11) de section réduite (So) et un divergent (14) raccordé au col de tuyère (11) et se terminant à sa partie aval (15) par une section de sortie des gaz (Se) définissant un rapport de section ($\varepsilon$ = Se/So), caractérisée en ce qu'un obstacle annulaire largable (20) est rapporté à l'extrémité aval (15) du divergent (14) de manière à définir à la sortie du divergent (14) une zone (25) de section ($S_1$) sélectivement réduite afin d'assurer, dans une première phase de vol, une stabilité du décollement de l'écoulement de gaz chauds par rapport à la paroi du divergent (14).

2. Tuyère selon la revendication 1, caractérisée en ce que la zone (25) de section ($S_1$) sélectivement réduite constitue de l'ordre de 55 à 85% de la section de sortie (Se) du divergent (14).

3. Tuyère selon la revendication 1 ou la revendication 2, caractérisée en ce que l'obstacle annulaire (20) est constitué par un anneau de forme axisymétrique incliné vers l'extérieur par rapport à un plan perpendiculaire à l'axe de la tuyère (10) en formant un angle compris entre environ 20° et 45° par rapport à ce plan et présentant une courbure régulière.

4. Tuyère selon l'une quelconque des revendications 1 à 3, caractérisée en ce que l'obstacle annulaire (20) est constitué par un ensemble de secteurs angulaires (21) assemblés les uns aux autres et munis de surfaces de contact qui rendent leurs déplacements solidaires.

**5.** Tuyère selon l'une quelconque des revendications 1 à 4, caractérisée en ce que l'obstacle annulaire (20) est équipé d'un dispositif de protection thermique (60).

**6.** Tuyère selon l'une quelconque des revendications 1 à 5, caractérisée en ce que l'obstacle annulaire (20) comprend des moyens (30) de liaison sélective avec l'extrémité aval (15) du divergent (14) et en ce que la rupture de ces moyens de liaison (30) est commandée à distance.

**7.** Tuyère selon l'une quelconque des revendications 1 à 5, caractérisée en ce qu'elle comprend des moyens (30) de liaison entre l'obstacle annulaire (20) largable et l'extrémité aval (15) du divergent qui sont configurés de manière à se rompre automatiquement après un temps de fonctionnement prédéterminé.

**8.** Tuyère selon la revendication 4, caractérisée en ce que les secteurs angulaires (21) assemblés les uns aux autres comprennent un talon (24) en forme d'étrier destiné à venir enserrer une bride (15a) formée à l'extrémité aval du divergent (14).

**9.** Tuyère selon la revendication 4 ou la revendication 8, caractérisée en ce que les secteurs angulaires (21) sont assemblés les uns aux autres par des emboîtements (22,23).

**10.** Tuyère selon l'une quelconque des revendications 4, 8 et 9, caractérisée en ce que les secteurs angulaires (21) constituant l'obstacle annulaire (20) présentent une extrémité interne (25) recourbée définissant une gorge (27) dans laquelle est engagé un câble (31) coopérant avec un système (28,29,32) de tension et de déverrouillage pour maintenir les secteurs angulaires (21) assemblés entre eux et raccordés au divergent (14) pendant ladite première phase de vol et libérer les secteurs angulaires (21) et permettre leur éjection pour libérer la section de sortie du divergent à la fin de ladite première phase de vol.

**11.** Tuyère selon la revendication 5, caractérisée en ce que le dispositif de protection thermique (60) comprend des moyens (61) d'injection de gaz de turbine à travers la paroi du divergent (14) en aval de la zone (17) de décollement de l'écoulement de gaz chauds par rapport à la paroi du divergent (14).

**12.** Tuyère selon la revendication 5, caractérisée en ce que le dispositif de protection thermique (60) comprend des moyens (62) de mise en circulation de gaz frais à travers la paroi de l'obstacle annulaire (20).

**13.** Tuyère selon les revendications 5 et 11, caractérisée en ce que le dispositif de protection thermique (60) comprend des moyens (63) d'injection de gaz de turbine à travers la paroi du divergent (14) au voisinage de la section de sortie du divergent et de la zone de raccordement de l'obstacle annulaire (20).

**14.** Tuyère selon la revendication 5, caractérisée en ce que le dispositif de protection thermique (60) comprend un matériau abradable formant une partie au moins de l'obstacle annulaire (20).

**15.** Tuyère selon l'une quelconque des revendications 1 à 4, caractérisée en ce que l'obstacle annulaire (20) est constitué d'un matériau abradable.

**16.** Tuyère selon l'une quelconque des revendications 1 à 15, caractérisée en ce que le rapport de section $\varepsilon$ de la tuyère est supérieure à 45.

**17.** Tuyère selon l'une quelconque des revendications 1 à 16, caractérisée en ce que le rapport de section $\varepsilon$ de la tuyère est supérieure ou égal à 80.

**18.** Tuyère selon la revendication 7, caractérisée en ce que les moyens de liaison à rupture automatique comprennent des pièces en matériau composite abradable.

**Patentansprüche**

**1.** Raketendüse mit selektiv reduziertem Austrittsquerschnitt für die erste Trägerraketenstufe mit einem konvergenten Bereich (12), der die in einer Brennkammer (13) erzeugten Gase aufnimmt, einem Düsenhals (11) mit reduziertem Querschnitt (S0) und einem an den Düsenhals (11) angeschlossenen divergenten Bereich (14), der in seinem stromabwärtigen Abschnitt (15) in einem Gasaustrittsquerschnitt (Se) endet, womit ein Querschnittsverhältnis ($\varepsilon$ = Se/S0) definiert wird,
gekennzeichnet durch
eine abwerfbare ringförmige Vorrichtung (20), die an das stromabwärtige Ende (15) des divergenten Bereichs (14) angebracht ist und beim Austritt des divergenten Bereichs (14) eine Zone (25) mit selektiv reduziertem Querschnitt (S1) definiert, womit in einer ersten Flugphase die Stabilität der Strömungsablösung der heißen Gase von der Wand des divergenten Bereichs (14) gesichert ist.

**2.** Düse nach Anspruch 1, dadurch gekennzeichnet, daß die Zone (25)des selektiv reduzierten Querschnittes (S1) ungefähr 55 % bis 85 % des Austrittsquerschnittes (Se) des divergenten Bereichs (14) ausmacht.

3. Düse nach Anspruch 1 oder 2, dadurch gekennzeichnet, daß die ringförmige Vorrichtung (20) aus einem achsensymmetrischen Ring besteht, der in bezug auf eine zur Achse der Düse (10) senkrechten Ebene abgewinkelt ist und mit dieser Ebene einen Winkel zwischen 20° und 45° einschließt und regelmäßig gekrümmt ist.

4. Düse nach einem der Ansprüche 1 bis 3, dadurch gekennzeichnet, daß die ringförmige Vorrichtung (20) aus mehreren abgewinkelten, aneinandergefügten Sektoren besteht, die Kontaktflächen aufweisen, die die Bewegung in einem Stück ermöglichen.

5. Düse nach einem der Ansprüche 1 bis 4, dadurch gekennzeichnet, daß die ringförmige Vorrichtung (20) eine thermischen Schutzvorrichtung (60) aufweist.

6. Düse nach einem der Ansprüche 1 bis 5, dadurch gekennzeichnet, daß die ringförmige Vorrichtung (20) Mittel (30) zur selektiven Verbindung mit dem stromabwärtigen Ende (15) des divergenten Bereichs (14) aufweist, und dadurch, daß der Bruch dieser Verbindungsmittel (30) ferngesteuert ist.

7. Düse nach einem der Ansprüche 1 bis 5, gekennzeichnet durch Mittel (30) zur Verbindung der abwerfbaren ringförmigen Vorrichtung (20) mit dem stromabwärtigen Ende (15) des divergenten Bereichs, die so konfiguriert sind, daß sie sich nach einer vorbestimmten Betriebszeit automatisch lösen.

8. Düse nach Anspruch 4, dadurch gekennzeichnet, daß die aneinandergefügten abgewinkelten Sektoren (21) einen bügelförmigen Absatz (24) aufweisen, der einen am stromabwärtigen Ende des divergenten Bereichs (14) ausgebildeten Flansch (15a) umschließt.

9. Düse nach Anspruch 4 oder Anspruch 8, dadurch gekennzeichnet, daß die abgewinkelten Sektoren (21) durch Vorsprünge (22, 23) aneinandergefügt sind.

10. Düse nach einem der Ansprüche 4, 8 und 9, dadurch gekennzeichnet, daß die abgewinkelten Sektoren (21) eine ringförmigen Vorrichtung (20) mit einem zurückgebogenen inneren Ende (25) darstellen, das eine Rille (27) definiert, in welches ein Kabel (31) eingreift, das mit einem Zug- und Verschlußsystem (28, 29, 32) zusammenwirkt und die abgewinkelten Sektoren (21) während der ersten Flugphase an dem divergenten Bereich (14) befestigt und aneinandergefügt läßt und die abgewinkelten Sektoren (21) loslöst und ihren Abwurf ermöglicht, um den Ausgangsquerschnitt des divergenten Bereichs am Ende der ersten Flugphase freizumachen.

11. Düse nach Anspruch 5, dadurch gekennzeichnet, daß die thermische Schutzvorrichtung (60) Mittel (61) zur Injektion von Turbinengas durch die Wand des divergenten Bereichs (14) stromabwärts der Zone (17) der Strömungsablösung der heißen Gase von der Wand des divergenten Bereichs (14) aufweist.

12. Düse nach Anspruch 5, dadurch gekennzeichnet, daß die thermische Schutzvorrichtung (16) Mittel (62) aufweist, die frisches Gas durch die Wand der ringförmigen Vorrichtung (20) zirkulieren lassen.

13. Düse nach Ansprüchen 5 und 11, dadurch gekennzeichnet, daß die thermische Schutzvorrichtung (60) Mittel (63) zur Injektion von Turbinengas durch die Wand des divergenten Bereichs (14) in der Nähe des Austrittsquerschnitts des divergenten Bereichs und in der Nähe des Bereichs für den Anschluß der ringförmigen Vorrichtung (20) aufweist.

14. Düse nach Anspruch 5, dadurch gekennzeichnet, daß die thermische Schutzvorrichtung (60) ein abschleifbares Material aufweist, das wenigstens einen Teil des ringförmigen Vorrichtung (20) bildet.

15. Düse nach einem der Ansprüche 1 bis 4, dadurch gekennzeichnet, daß der ringförmige Vorrichtung (20) aus abschleifbarem Material besteht.

16. Düse nach einem der Ansprüche 1 bis 15, dadurch gekennzeichnet, daß das Querschnittsverhältnis ε der Düse größer als 45 ist.

17. Düse nach einem der Ansprüche 1 bis 16, dadurch gekennzeichnet, daß das Querschnittsverhältnis ε der Düse größer oder gleich 80 ist.

18. Düse nach Anspruch 7, dadurch gekennzeichnet, daß die Verbindungsmittel zum automatischen Abwurf Teile aus abschleifbarem Verbundmaterial aufweisen.

## Claims

1. A rocket engine nozzle with a selectively reduced outlet cross-section for the first stage of a launcher, the nozzle comprising a converging portion (12) which receives the gases produced in a combustion chamber (13), a nozzle throat (11) of reduced cross-section (So) and a diverging part (14) connected to the nozzle throat and terminating at its downstream portion (15) in a gas outlet cross-section (Se) defining a cross-section ratio ($\varepsilon =$ Se/So), the nozzle being characterized in that a releasable annular obstacle (20) is connected to the downstream end (15) of the diverging part (14) so as to define at the outlet of the diverging part (14) a zone (25) of selectively reduced cross-section (S1) which ensures stability of the separation of the flow of hot gases relative to the wall of the diverging part (14) during a first phase of flight.

2. A nozzle according to claim 1, characterized in that the zone (25) of selectively reduced cross-section (S1) constitutes about 55% to 85% of the outlet cross-section (Se) of the diverging part (14).

3. A nozzle according to claim 1 or claim 2, characterized in that the annular obstacle (20) is constituted by an axially symmetrical ring which is inclined towards the outside relative to a plane perpendicular to the axis of the nozzle (10), to form with that plane an angle lying in the range of about 20° to 45°, the ring having a uniform curvature.

4. A nozzle according to any of claims 1 to 3, characterized in that the annular obstacle (20) is constituted by a set of angular sectors (21) assembled to one another and provided with contact surfaces which cause them to move in unison.

5. A nozzle according to any of claims 1 to 4, characterized in that the annular obstacle (20) is provided with thermal protection means (60).

6. A nozzle according to any of claims 1 to 5, characterized in that the annular obstacle (20) includes means (30) for selectively connecting it to the downstream end (15) of the diverging part (14) and in that the rupture of these connecting means (30) is remotely controlled.

7. A nozzle according to any of claims 1 to 5, characterized in that it comprises means (30) for connecting the releasable annular obstacle (20) to the downstream end (15) of the diverging part, which means are configured so as to break automatically after a predetermined operating time.

8. A nozzle according to claim 4, characterized in that the angular sectors (21) assembled to one another each include a hook (24) in the form of a clamp intended to grip a flange (15a) formed at the downstream end of the diverging part (14).

9. A nozzle according to claim 4 or claim 8, characterized in that the angular sectors (21) are assembled to one another by overlapping joints (22, 23).

10. A nozzle according to any of claims 4, 8 or 9, characterized in that the inside end (25) of each of the angular sectors (21) constituting the annular obstacle (20) is curved back so as to define a groove (27) in which there is engaged a cable (31) cooperating with a tensioning and unlocking system (28, 29, 32) to maintain the angular sectors (21) assembled to each other and connected to the diverging part (14) during said first phase of flight, and to release the angular sectors (21) and allow them to be ejected so as to release the outlet section of the diverging part at the end of said first phase of flight.

11. A nozzle according to claim 5, characterized in that the thermal protection means (60) comprises means (61) for injecting turbine gas through the wall of the diverging part (14) downstream of the zone (17) at which the flow of hot gases separates from the wall of the diverging part (14).

12. A nozzle according to claim 5, characterized in that the thermal protection means (60) comprises means (62) for circulating cool gas through the wall of the annular obstacle (20).

13. A nozzle according to claims 5 and 11, characterized in that the thermal protection means (60) comprises means (63) for injecting turbine gas through the wall of the diverging part (14) in the vicinity both of the outlet section of the diverging part and of the zone where the annular obstacle (20) is connected.

14. A nozzle according to claim 5, characterized in that the thermal protection means (60) comprises an abradable material which forms at least part of the annular obstacle (20).

15. A nozzle according to any of claims 1 to 4, characterized in that the annular obstacle (20) is constituted by an abradable material.

16. A nozzle according to any of claims 1 to 15, characterized in that the cross-section ratio $\varepsilon$ of the nozzle is greater than 45.

17. A nozzle according to any of claims 1 to 16, characterized in that the cross-section ratio $\varepsilon$ of the nozzle is not less than 80.

18. A nozzle according to claim 7, characterized in that the connecting means which rupture automatically comprise parts made of abradable composite material.

# FIG.1

# FIG.2

# FIG.3

FIG.4

FIG.6

FIG.5

FIG.7

FIG. 8A

FIG. 8B

FIG. 8C

# FIG. 9